# EUROPEAN PATENT SPECIFICATION

(11) **EP 3 710 211 B1**
(45) Date of publication and mention of the grant of the patent: **29.03.2023**
(21) Application number: 17809173.2
(22) Date of filing: 15.11.2017
(51) Int. Cl.: B27K 3/00, B27K 3/26, B27K 5/02, C01G 49/02

(54) **METHOD OF STAINING WOOD AND METHOD OF DETERMINATION OF PHENOLIC COMPOUNDS CONTENT IN WOOD**
VERFAHREN ZUM FÄRBEN VON HOLZ UND VERFAHREN ZUR BESTIMMUNG DES GEHALTS AN PHENOLVERBINDUNGEN IN HOLZ
PROCÉDÉ DE COLORATION DU BOIS ET PROCÉDÉ DE DÉTERMINATION DE LA TENEUR EN COMPOSÉS PHÉNOLIQUES DANS LE BOIS

(43) Date of publication of application: 23.09.2020
(73) Proprietor: Ustav Analyticke Chemie AV CR, V.V.I., 60200 Brno (CZ); Mendelova Univerzita v Brne, 61300 Brno (CZ); Palcer, Jaroslav, 57201 Policka (CZ)
(72) Inventor: PALCER, Jaroslav, 57201 Policka (CZ); PARIL, Petr, 66451 Slapanice (CZ); BAAR, Jan, 74301 Bilovec (CZ); FORET, Frantisek, 62100 Brno (CZ); KRENKOVA, Jana, 62100 Brno (CZ)
(74) Representative: Hartvichova, Katerina
(86) International application number: PCT/CZ2017/050058
(87) International publication number: WO 2019/096336

(56) References cited:
- WO-A1-2014/188392
- US-A1- 2006 075 923
- US-B1- 6 183 658

## Description

### Field of Art

The invention relates to modification of the properties of wood, more specifically to change of wood colour (staining) with an increased UV stability of wood, and to method of preparation of iron oxide nanoparticles suitable for the staining.

### Background Art

The industrial practice currently uses ammonia treatment to stain wood without the need for use of pigments. This method uses the reaction of phenolic compounds such as tannins with ammonia vapours and the subsequent colour change - darkening. The disadvantage is that it can only be applied to new products and cannot be used to wood that is already integrated in wooden or combined structures. Methods replacing the ammonia treatment are known, but they still require the use of varying amounts of ammonia during the process, and leave ammonia residues in the final product. Additional steps for ammonia removal are then needed.

Wood which contains tannins (such as oak, black locust, etc.) is darkened in an ammoniacontaining medium by reaction of ammonia with tannins. A sufficient amount of air oxygen must also be supplied for dark color to ensure darkening wood heartwood.

It is known that wood, in particular wood with high content of tannins, reacts with iron ions in wet conditions, said reaction resulting in a colour change. This colour change, occurring locally for example in points of contact of an iron-based material with the wood, was always considered as undesirable. Therefore, plastic bands are used for stacking wood instead of iron bands.

The reaction of tannin phenols with iron ions was described by a number of authors. The phenols are an important component for chelation of metal ions. Iron, depending on its concentration and the pH of the material to be modified, changes the color of the phenols contained in the oak wood to dark blue, dark green to black. The reaction is accelerated by the presence of oxygen.

Czech Patent CZ 306249 describes a method of impregnation of wood by a composition containing iron oxide nanoparticles. The iron oxide nanoparticles are produced by a standard method comprising the steps of precipitation of iron ions using ammonium hydroxide as a base, and thorough and repeated purification of the resulting nanoparticles. CZ 306249 claims that only wood with content of tannins can be stained using this method. US 6 183 658 discloses a method for producing iron oxide nanoparticles by precipitation with a base. WO 2014/188392 discloses a method of staining wood by impregnating wood with a solution comprising iron oxide. US 2006/075923 discloses a method for treating wood to protect it from insect attack and decay by impregnation with iron oxide nanoparticles.

### Disclosure of the Invention

The present invention relates to a method of staining wood using iron nanoparticles, wherein
- iron oxide nanoparticles are prepared by precipitation of iron(II) and/or iron(III) ions in basic medium, wherein the base is a non-ammonium base which is 2-amino-2-methyl-1-propanol to form iron oxide nanoparticles having a Z-average particle size in the range of 1 to 500 nm, preferably 1 to 100 nm, more preferably 1 to 50 nm or 5 to 20 nm, as measured by dynamic light scattering method (DLS), and
- wood is impregnated with a composition containing said iron oxide nanoparticles in concentration within the range of 0.1 g/l to 100, preferably 0.1 g/l to 42 g/l.

It was discovered within the framework of the present invention that use of iron oxide nanoparticles prepared without the use of ammonium base in wood staining results in an improved UV stability of the colour obtained by staining. UV stability is an important property for durability of wooden products. Furthermore, the step of thorough and repeated purification is not needed when non-ammonium base is used, thereby rendering the industrial processes for production of the nanoparticles less complex and less cost-demanding.

The method of treatment is based on the modification of wood colour using the reaction between wood phenolic compounds such as tannins and iron oxide nanoparticles. The impregnation of wood can be done by pressure impregnation, immersion, brushing or spraying.

Pressure impregnation, immersion, brushing or spraying can be used for impregnation of wood before their use in wooden structures and products. However, the method of the present invention can also be used for brushing or spraying of older, already built-in wood (e.g. flooring, cladding). The prior art methods using impregnation by ammonia could not be used for older, built-in wood.

Using the method of the invention, wood gets a darker shade while its natural texture is preserved, so it aesthetically resembles the desired exotic species.

Another advantage of the process of the invention is that the staining can easily be removed by oxalic acid. Application of oxalic acid returns the natural color to the wood. This can be used, e.g. when the consumer does not like the result of staining.

Yet another important advantage of the present method using the iron oxide nanoparticles produced using a non-ammonium base consists in that also wood with low or no content of tannins (beech, spruce, etc.) can be stained.

The composition for impregnation of wood preferably does not contain iron chlorides. The presence of iron chlorides in the product is undesirable, because they can increase the moisture absorption and corrosion of wood due to the moisture.

The desired colour change can be achieved with very small concentrations of iron oxide nanoparticles (from 0.1 g/l). Considering the a Z-average particle size in the range of 1 to 500 nm, preferably 1 to 100 nm, more preferably 1 to 50 nm, even more preferably 5 to 20 nm, most preferably 10 nm, penetration of the nanoparticles into the wood cell wall, where the largest quantity of phenolic compounds are located, is achieved. The UV resistance of the treated wood is increased, and contributes to improved usability of the product.

The colouring is predominantly a result of the reaction of iron oxide nanoparticles with wood phenolic compounds such as tannins; i.e. the principle is not applying pigments containing iron oxide particles, where the colouring would be caused by iron oxides as a pigment. Therefore, the colouring is more natural and similar to the result of ammonia treatment. The content of phenolic compounds such as tannins in wood markedly affects the resultant colour change. Therefore, heartwood (oak or black locust) with high content of phenolic compounds such as tannins darkens considerably. However, the colour changes can also be observed in the sapwood and other tree species.

To increase the penetration and reach its maximum depth, impregnation may be carried out as pressure impregnation, followed by soaking. Pressure impregnation can be done, for example, by a method wherein the wood is inserted in a closed chamber. First, a negative pressure is induced (i.e. pressure lower than atmospheric pressure), then the impregnation composition is introduced into the chamber, and the pressure is increased above the atmospheric pressure. Subsequently, negative pressure can be used to remove the product remnants from the surface and lumina of the wood cells. Finally, the wood is soaked in the impregnation substance.

In the case of wood already integrated in structures or products, where pressure impregnation and soaking are not feasible, or easily impregnable wood, impregnation is carried out by brushing or spraying.

If required, the final surface treatment, such as oil, varnish, wax, etc. can be added after impregnation.

The wood treatment does not affect the strength of the bonded joints.

The present invention further involves a method of preparation of the iron oxide nanoparticles, comprising the steps of
- providing iron(II) and/or iron(III) ions, preferably in the form of salts with inorganic or organic anions, such as chloride, bromide, sulphate, citrate, acetate,
- dissolving the iron(II) and/or iron(III) ions in liquid medium, and adding a base, wherein the base is a non-ammonium base which is 2-amino-2-methyl-1-propanol, to form and precipitate iron oxide nanoparticles having a Z-average particle size in the range of 1 to 500 nm, preferably 1 to 100 nm, more preferably 1 to 50 nm or 5 to 20 nm, as measured by dynamic light scattering method (DLS).

The iron oxide nanoparticles having a Z-average particle size in the range of 1 to 500 nm, preferably 1 to 100 nm, more preferably 1 to 50 nm or 5 to 20 nm, as measured by dynamic light scattering method (DLS), obtained by the above-described method, using a non-ammonium base, can be formulated into compositions containing a liquid medium. The liquid medium can be polar or nonpolar. A polar medium may be for example water; a nonpolar liquid medium is e.g. oil. The use of oil is beneficial as it more increases the value in use of the treated wood, especially for outdoor applications.

### Examples of carrying out the Invention

### Example 1

Comparative preparation (according to CZ 306249):
Iron oxide nanoparticles were synthesized by a co-precipitation method. In one example iron(II) chloride tetrahydrate (0.3 g), iron(III) chloride hexahydrate (0.82 g), hydrochloric acid (20 µL) and tri-sodium citrate dihydrate (1.14 g) were first dissolved in 38 mL of water. A 25% ammonium hydroxide solution (2.5 ml) was added rapidly to this solution under vigorous stirring at room temperature. The formation of nanoparticles was observed as a change of the transparent into a dark brown nontransparent solution. The nanoparticles were precipitated and washed 3x by acetone and redissolved in water. The Z-average size of the nanoparticles was measured using the DLS (dynamic light scattering) and was about 10 nm.

Examples of preparations according to the invention and comparative preparations:
Iron oxide nanoparticles were synthesized by a co-precipitation method. In one example iron(II) chloride tetrahydrate (0.3 g), iron(III) chloride hexahydrate (0.82 g), hydrochloric acid (20 µL) and tri-sodium citrate dihydrate (1.14 g) were first dissolved in 38 mL of water. A non-ammonium base solution was added rapidly to this solution under vigorous stirring at room temperature. The formation of nanoparticles was observed as a change of the transparent into a dark brown nontransparent solution.

The non-ammonium bases tested were 2-amino-2-methyl-1-propanol (2.5 mL of 25% solution in water, hereinafter abbrevited as AMP), sodium or potassium hydroxide (1 mL of 10 mol/L; comparative example) or meglumine (2.5 mL of 25% solution in water; comparative example).

The Z-average size of the nanoparticles was measured using the DLS (dynamic light scattering) and was about 10 nm.

For further use, the solutions were diluted to the final concentrations of iron nanoparticles as shown in individual examples and tables.

### Example 2

Products containing nanoparticles of the invention prepared according to example 1 in several different concentrations in the range from 0.1 up to 42 g/l were used for the treatment of wood of different species. The colour change of wood is caused by the reaction of phenolic compounds such as tannins and iron. The content of phenolic compounds such as tannins in wood markedly affects the resultant colour change. Therefore, heartwood (oak or black locust) with high content of tannins darkens considerably. However, the colour changes can also be observed in sapwood and other tree species. The effect of the concentration of the solution of iron oxide nanoparticles (0.1 to 42 g/l) on the colour change of oak heartwood is negligible; however, the differences in colour of oak sapwood are noticeable. Another advantage of the wood treated in this way is reduced moisture absorption and increased UV resistance. Wood manifested deeper darkening after the treatment by nano-iron than after ammonia treatment. The solution of iron oxide nanoparticles can be prepared both in polar (e.g. water) and nonpolar (e.g. oil) solvents. Oil more increases the value in use of the treated wood, especially for outdoor applications.

The heartwood of oak and black locust is hardly impregnable due to the large amount of tyloses in the wood conductive tissues. To increase the penetration and its maximum depth, a specific way of impregnation was selected. It consisted in pressure impregnation (Bethel) and subsequent soaking. The procedure for oak with a moisture content of 20 to 30% is the following: First, negative pressure of 10 kPa is created in the chamber with wood and it is kept for one hour. Then impregnation agent (preparation of the invention) is introduced into the chamber and a pressure of 800 kPa is used for two hours. Finally, wood is soaked for one week. Specific parameters of the impregnation can be modified based on the input parameters of the wood (tree species, temperature, moisture content, and dimensions). Brushing or spraying with a final surface finish (oil, lacquer, wax, etc.) can be used for the application to integrated wood (where pressure impregnation is not feasible). The results for oak are shown in Table 1, and for beech and spruce in Table 2. Table 1 further shows the effect of oxalic acid on the stained wood. The treatment with oxalic acid was done by soaking stained wood in the oxalic acid (10 % w/w aqueous solution) for 30 s. Treated wood was washed off with water and then oven-dried for the lightness measurement. Treatment with oxalic acid may be used to bleach the wood to the original or nearly original lightness of colour.

First prototypes of two-layers flooring system (oak) were prepared and tested in wood-aging chamber.

The CIE LAB measuring system of Lighness L was used in all examples of the present invention.

**Table 1: Lightness of oak wood after treatment with the nanoiron preparation of the invention (prepared using AMP, similar results were obtained for KOH, NaOH, meglumin) and subsequent treatment with oxalic acid (10 % w/w aqueous solution). ΔL = difference in lightness.**

| | **Lightness L** | | | | |
|---|---|---|---|---|---|
| **Wood (concentration of the preparation used)** | **Untreated** | **Nanoiron** | **Oxalic acid (10%)** | **ΔL (oxalic acid - nanoiron)** | **ΔL (untreated - oxalic acid)** |
| **oak (4 g/l)** | 65.57 | 32.60 | 65.61 | 33.01 | -0.04 |
| **oak (10 g/l)** | 67.56 | 30.66 | 67.03 | 36.37 | 0.53 |
| **oak (20 g/l)** | 66.84 | 26.95 | 65.33 | 38.39 | 1.51 |
| **oak (42 g/l)** | 69.30 | 27.93 | 63.48 | 35.55 | 5.82 |

**Table 2: Lightness of species with low or zero content of tannins, treated by the nanoiron preparations of the present invention (prepared using AMP). ΔL = difference in lightness.**

| | **Lightness L** | | |
|---|---|---|---|
| | **Untreated** | **Nanoiron** | **ΔL (untreated-nanoiron)** |
| **beech (4 g/l)** | 66.92 | 39.87 | 27.05 |
| **beech (10 g/l)** | 68.20 | 39.1 | 29.10 |
| **beech (20 g/l)** | 67.40 | 38.07 | 29.33 |
| **beech (42 g/l)** | 67.44 | 32.64 | 34.80 |
| **spruce (4 g/l)** | 82.20 | 59.06 | 23.14 |
| **spruce (10 g/l)** | 84.23 | 55.70 | 28.53 |
| **spruce (20 g/l)** | 83.83 | 51.37 | 32.46 |
| **spruce (42 g/l)** | 83.85 | 50.82 | 33.03 |

### Example 3

UV stability of oak wood treated with nanoiron oxides (4 g/l) prepared using 2-amino-2-methyl-1-propanol (AMP), sodium or potassium hydroxide (comparative examples) is enhanced compared to treatment with nanoiron oxides (4 g/l) prepared with ammonia. The results of lightness change after exposure of 500 hours to UV radiation are shown in table 1. Similar UV protective properties were obtained for other concentrations of iron nanoparticles.

**Table 3: Lightness of oak wood before and after UV radiation**

| | **Lightness L** | | | |
|---|---|---|---|---|
| **Time of dry mode** | **Nanoiron (ammonium base)** | **Nanoiron (AMP base)** | **Nanoiron (NaOH base)** | **Nanoiron (KOH base)** |
| **0 h** | 34.2 | 35.1 | 35.4 | 35.9 |
| **500 h** | 42.7 | 42.0 | 42.6 | 43.0 |
| **difference in lightness L** | 8.5 | 6.9 | 7.2 | 7.1 |

### Industrial Applicability

The method of staining wood with increased UV stabilization is suitable for wood used both in interior and exterior; use for interior wood is preferred. The method is applicable for staining wood directly in the production; but its application to wood already integrated in structure and products is also possible. The method can therefore be used for flooring, cladding, furniture, veneer, etc.

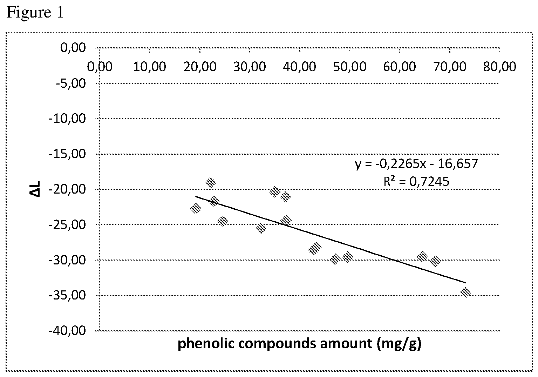

## Claims

1. A method of preparation of iron oxide nanoparticles, comprising the steps of
- providing iron(II) and/or iron(III) ions, preferably in the form of salts with inorganic or organic anions, such as chloride, bromide, sulphate, citrate, acetate,
- dissolving the iron(II) and/or iron(III) ions in liquid medium, and adding a base, wherein the base is a non-ammonium base which is 2-amino-2-methyl-1-propanol, to form and precipitate iron oxide nanoparticles having a Z-average particle size in the range of 1 to 500 nm, preferably 1 to 100 nm, more preferably 1 to 50 nm or 5 to 20 nm, as measured by dynamic light scattering method (DLS).

2. A method of staining wood using iron oxide nanoparticles, **characterized in that** it comprises the following steps:
- preparing iron oxide nanoparticles by the method according to claim 1, and
- impregnating wood with a composition containing said iron oxide nanoparticles in concentration within the range of 0.1 g/l to 100 g/l.

3. The method according to claim 2, wherein the impregnation is carried out by pressure impregnation, brushing or spraying.

4. The method according to claim 2 or 3, wherein the composition for impregnation of wood does not contain iron chlorides.

## Patentansprüche

1. Verfahren zur Herstellung von Eisenoxid-Nanopartikeln, umfassend die Schritte
- Bereitstellen von Eisen(II)- und/oder Eisen(III)-Ionen, vorzugsweise in Form von Salzen mit anorganischen oder organischen Anionen, wie Chlorid, Bromid, Sulfat, Citrat, Acetat,
- Auflösen der Eisen(II)- und/oder Eisen(III)-Ionen in flüssigem Medium und Zugabe einer Base, wobei die Base eine Nicht-Ammonium-Base ist, die 2-Amino-2-methyl-1-propanol ist, um zu bilden und präzipitieren Eisenoxid-Nanopartikel mit einer Z-average Partikelgröße im Bereich von 1 bis 500 nm, vorzugsweise 1 bis 100 nm, stärker bevorzugt 1 bis 50 nm oder 5 bis 20 nm, gemessen durch ein dynamisches Lichtstreuungsverfahren (DLS).

2. Verfahren zur Färbung von Holz unter Verwendung von Eisenoxid-Nanopartikeln, **dadurch gekennzeichnet, dass** es die folgenden Schritte umfasst:
- Herstellen von Eisenoxid-Nanopartikeln nach dem Verfahren nach Anspruch 1, und
- Imprägnieren von Holz mit einer Zusammensetzung, die die Eisenoxid-Nanopartikel in einer Konzentration im Bereich von 0,1 g/l bis 100 g/l enthält.

3. Verfahren nach Anspruch 2, wobei die Imprägnierung durch Druckimprägnieren, Bürsten oder Sprühen erfolgt.

4. Verfahren nach Anspruch 2 oder 3, wobei die Zusammensetzung zur Imprägnierung von Holz keine Eisenchloride enthält.

## Revendications

1. Procédé de préparation de nanoparticules d'oxyde de fer, comprenant les étapes de
- apporter des ions fer(II) et/ou fer(III), de préférence sous forme de sels avec des anions inorganiques ou organiques, tels que chlorure, bromure, sulfate, citrate, acétate,
- dissoudre les ions fer(II) et/ou fer(III) dans un milieu liquide, et ajouter une base, la base étant une base non ammonium qui est le 2-amino-2-méthyl-1-propanol, pour former et précipiter des nanoparticules d'oxyde de fer ayant une taille de particule Z-average dans la plage de 1 à 500 nm, de préférence de 1 à 100 nm, plus préférablement de 1 à 50 nm ou de 5 à 20 nm, telle que mesurée par la méthode de diffusion dynamique de la lumière (DLS).

2. Procédé de coloration du bois à l'aide de nanoparticules d'oxyde de fer, **caractérisé en ce qu'**il comprend les étapes suivantes:
- préparer des nanoparticules d'oxyde de fer par le procédé selon la revendication 1, et
- imprégnation du bois avec une composition contenant lesdites nanoparticules d'oxyde de fer en concentration comprise entre 0,1 g/l et 100 g/l.

3. Procédé selon la revendication 2, dans lequel l'imprégnation est réalisée par imprégnation sous pression, au pinceau ou par pulvérisation.

4. Procédé selon la revendication 2 ou 3, dans lequel la composition d'imprégnation du bois ne contient pas de chlorures de fer.
